(19) Europäisches Patentamt
European Patent Office
Office européen des brevets

(11) **EP 3 778 750 A1**

(12) **EUROPEAN PATENT APPLICATION**
published in accordance with Art. 153(4) EPC

(43) Date of publication:
**17.02.2021 Bulletin 2021/07**

(21) Application number: **19785616.4**

(22) Date of filing: **11.03.2019**

(51) Int Cl.:
*C08L 9/00* $^{(2006.01)}$     *C08J 3/22* $^{(2006.01)}$
*C08K 3/04* $^{(2006.01)}$     *C08K 3/06* $^{(2006.01)}$
*C08K 3/36* $^{(2006.01)}$     *C08K 5/47* $^{(2006.01)}$
*C08L 93/04* $^{(2006.01)}$     *C08L 101/08* $^{(2006.01)}$

(86) International application number:
**PCT/JP2019/009559**

(87) International publication number:
**WO 2019/198398 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2018 JP 2018074787**

(71) Applicant: **Sumitomo Rubber Industries, Ltd.**
**Kobe-shi, Hyogo 651-0072 (JP)**

(72) Inventor: **MIYAZAKI, Tatsuya**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **RUBBER COMPOSITION**

(57) The present invention aims to provide a rubber composition which provides a balanced improvement in tensile properties, fuel economy, and abrasion resistance. The present invention relates to a rubber composition including a rubber component containing a diene rubber; silica and/or carbon black; and a masterbatch containing sulfur and a resin having an acid value of 5 or higher.

EP 3 778 750 A1

**Description**

TECHNICAL FIELD

The present invention relates to a rubber composition.

BACKGROUND ART

Powdered sulfur may be mixed with paraffin oils in order to reduce flammability to prevent explosion and to improve dispersibility in rubber. Meanwhile, aromatic oils containing aromatics are known to have poor compatibility with sulfur.

Moreover, in order to improve braking performance of tires, tread rubbers need to exhibit less deformation so that the axle stopping force can be instantaneously transmitted to the tread rubbers contacting the road surface. Thus, the tread rubbers need to have high hardness. However, such tread rubbers tend to have poor tensile properties as a tradeoff, resulting in poor resistance to rubber chipping. To solve this problem, various measures have been proposed, such as a method of reducing the sulfur content while increasing the vulcanization accelerator content, a method of using a hybrid crosslinking agent in combination, and a method of reducing the sulfur content and incorporating a crosslinkable phenol resin. Other proposed methods include incorporating a highly purified natural rubber or a resin such as a terpene-based resin, a rosin-based resin, or a coumarone-indene resin (see, for example, Patent Literature 1).

CITATION LIST

PATENT LITERATURE

Patent Literature 1: JP 5597959 B

SUMMARY OF INVENTION

TECHNICAL PROBLEM

Although various methods have been proposed and studied to achieve desirable rubber properties, as described above, for example, the methods of reducing the sulfur content while increasing the vulcanization accelerator content, or of reducing the sulfur content and incorporating a crosslinkable phenol resin, or other similar methods tend to deteriorate wet grip performance and retard initial cure rate. The method of using a hybrid crosslinking agent in combination can maintain wet grip performance and initial cure rate and improve abrasion resistance, but results in high material costs. The methods of incorporating a highly purified natural rubber or a resin such as a terpene-based resin, a rosin-based resin, or a coumarone-indene resin, or other similar methods tend to cause poor fuel economy and higher costs. Moreover, rubber properties cannot be improved by replacing powdered sulfur with oil-treated sulfur or a mixture of a coumarone-indene resin and sulfur. These various proposed methods still fail to provide satisfactory properties, and further improvement is desired. In particular, there has not been any known method of improving powdered sulfur to sufficiently improve tensile properties, fuel economy, and abrasion resistance at a lower cost, and such methods are desired.

The present invention aims to solve the problem and provide a rubber composition which provides a balanced improvement in tensile properties, fuel economy, and abrasion resistance.

SOLUTION TO PROBLEM

The present invention relates to a rubber composition, including:

a rubber component containing a diene rubber;
at least one of silica or carbon black; and
a masterbatch containing sulfur and a resin having an acid value of 5 or higher.

Preferably, the resin has an acid value of 10 to 180.
Preferably, the resin has a softening point of 120°C or lower.
Preferably, the rubber composition has a total sulfur content of 1.5 parts by mass or more per 100 parts by mass of the rubber component.
Preferably, the rubber composition includes a thiazole vulcanization accelerator in an amount of 1.5 parts by mass or less per 100 parts by mass of the rubber component.

The present invention also relates to a masterbatch, including:

sulfur; and
a resin having an acid value of 5 or higher.

Preferably, the masterbatch is free from any diene rubber.
The present invention also relates to a method of using as an additive to rubber a masterbatch containing sulfur and a resin having an acid value of 5 or higher.

ADVANTAGEOUS EFFECTS OF INVENTION

The rubber composition of the present invention includes a rubber component containing a diene rubber, silica and/or carbon black, and a masterbatch containing sulfur and a resin having an acid value of 5 or higher, and thus provides a balanced improvement in tensile properties, fuel economy, and abrasion resistance.

DESCRIPTION OF EMBODIMENTS

The rubber composition of the present invention includes a rubber component containing a diene rubber, silica and/or carbon black, and a masterbatch containing sulfur and a resin having an acid value of 5 or higher. The use of a masterbatch containing sulfur and a resin having an acid value of 5 or higher makes it possible to improve tensile properties and fuel economy as compared to a rubber composition prepared by simply mixing the sulfur and resin. Thus, the rubber composition of the present invention provides a balanced improvement in tensile properties, fuel economy, and abrasion resistance.
Although not clear, the reason for the above-described effect seems to be as follows.
When a masterbatch containing sulfur and a resin having an acid value of 5 or higher is prepared in advance, the sulfur and the carboxyl groups of the resin in the masterbatch interact with each other via ionic bonds to form a uniform mixture of the resin and sulfur. Then, in a rubber composition prepared by kneading such a masterbatch with a rubber component and other components, the sulfur is more likely to disperse than in a rubber composition in which powdered sulfur is simply mixed. Further, the sulfur is less likely to reaggregate even under oxidative degradation conditions. Thus, it is possible to obtain a rubber composition which provides a balanced improvement in tensile properties, fuel economy, and abrasion resistance.
The rubber component contains a diene rubber.
Examples of the diene rubber include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR). These may be used alone, or two or more of these may be used in combination. The rubber component preferably includes an isoprene-based rubber, BR, and/or SBR, more preferably BR and/or SBR, particularly preferably a combination of BR and SBR.
The rubber component may further contain rubbers other than diene rubbers as long as it contains a diene rubber. Examples of such other rubbers include butyl rubbers and fluororubbers.
The amount of the diene rubber based on 100% by mass of the rubber component is preferably 70% by mass or more, more preferably 80% by mass or more, still more preferably 90% by mass or more, and may be 100% by mass. When the amount of the diene rubber is within the range indicated above, the effects of the present invention can be suitably achieved.
Examples of the isoprene-based rubber include natural rubber (NR), polyisoprene rubber (IR), refined NR, modified NR, and modified IR. The NR may be one commonly used in the tire industry such as SIR20, RSS#3, or TSR20, and the IR may be one commonly used in the tire industry such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination.
The amount of the isoprene-based rubber, if present, based on 100% by mass of the rubber component is preferably 5% by mass or more, more preferably 10% by mass or more. The amount is preferably 50% by mass or less, more preferably 30% by mass or less. With such an amount, good grip performance can be achieved.
Non-limiting examples of the BR include those commonly used in the tire industry, such as BR having a high cis content, BR containing 1,2-syndiotactic polybutadiene crystals (SPB-containing BR), polybutadiene rubbers synthesized using rare earth catalysts (rare earth-catalyzed BR), and tin-modified polybutadiene rubbers (tin-modified BR) which have been modified with tin compounds. Commercial products of the BR include products from Ube Industries, Ltd., JSR Corporation, Asahi Kasei Corporation, Zeon Corporation, and Lanxess. These may be used alone, or two or more of these may be used in combination.

The cis content of the BR is preferably 80% by mass or more, more preferably 85% by mass or more, still more preferably 90% by mass or more, particularly preferably 95% by mass or more. With such a cis content, better abrasion resistance can be achieved.

The cis content herein is determined by infrared absorption spectrometry.

The BR may be an unmodified BR or modified BR.

The modified BR may be any BR having a functional group interactive with a filler such as silica. Examples include chain end-modified BR obtained by modifying at least one chain end of BR with a compound (modifier) having any of the functional groups below (chain end-modified BR terminated with any of the functional groups below); backbone-modified BR having any of the functional groups below in the backbone; backbone- and chain end-modified BR having any of the functional groups below in both the backbone and chain end (e.g., backbone- and chain end-modified BR in which the backbone has any of the functional groups below and at least one chain end is modified with a compound (modifier) having any of the functional groups below); and chain end-modified BR which has been modified (or coupled) with a polyfunctional compound having two or more epoxy groups in the molecule to introduce a hydroxyl or epoxy group.

Examples of the functional groups include amino (preferably amino whose hydrogen atom is replaced by a C1-C6 alkyl group), amide, silyl, alkoxysilyl (preferably Cl-C6 alkoxysilyl), isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy (preferably C1-C6 alkoxy), hydroxy, oxy, and epoxy groups. These functional groups may be substituted.

In particular, the BR is preferably rare earth-catalyzed BR as it provides good durability and abrasion resistance while ensuring good tensile properties and fuel economy.

The rare earth-catalyzed BR may be a conventional one, and examples include those synthesized using rare earth catalysts (catalysts including lanthanide rare earth compounds, organic aluminum compounds, aluminoxanes, or halogen-containing compounds, optionally with Lewis bases). Preferred among these are polybutadiene rubbers synthesized using neodymium (Nd) catalysts including neodymium-containing compounds as lanthanide rare earth compounds (Nd-catalyzed BR).

To more suitably achieve the effects of the present invention, the BR preferably has a glass transition temperature (Tg) of -160°C or higher, more preferably - 130°C or higher, but preferably -60°C or lower, more preferably -90°C or lower.

The glass transition temperature herein is measured at a rate of temperature rise of 10°C/min with a differential scanning calorimeter (Q200 available from TA Instruments Japan Inc.) in accordance with JIS-K7121.

The amount of the BR, if present, based on 100% by mass of the rubber component is preferably 5% by mass or more, more preferably 10% by mass or more, still more preferably 15% by mass or more. The amount is preferably 80% by mass or less, more preferably 70% by mass or less, still more preferably 50% by mass or less, particularly preferably 30% by mass or less. When the amount of the BR is within the range indicated above, sufficient mechanical strength and abrasion resistance can be achieved.

Non-limiting examples of the SBR include those commonly used in the tire industry, such as emulsion polymerized SBR (E-SBR) and solution polymerized SBR (S-SBR). These may be used alone, or two or more of these may be used in combination.

Commercial products of the SBR include products manufactured or sold by Sumitomo Chemical Co., Ltd., JSR Corporation, Asahi Kasei Corporation, and Zeon Corporation.

The SBR may be an unmodified SBR or modified SBR. Examples of the modified SBR include those in which functional groups as mentioned for the modified BR are introduced.

The SBR may be an oil extended SBR or non-oil extended SBR. When an oil extended SBR is used, the amount of oil extension of the SBR, i.e., the amount of the extender oil in the SBR is preferably 10 to 50 parts by mass per 100 parts by mass of the rubber solids of the SBR to more suitably achieve the effects of the present invention.

The SBR preferably has a styrene content of 5% by weight or more, more preferably 10% by weight or more, still more preferably 15% by weight or more. The styrene content is preferably 60% by weight or less, more preferably 50% by weight or less, still more preferably 45% by weight or less, particularly preferably 40% by weight or less. When the styrene content is within the range indicated above, the effects of the present invention can be more suitably achieved.

The styrene content of the SBR herein is determined by $^1$H-NMR analysis.

To more suitably achieve the effects of the present invention, the SBR preferably has a vinyl content of 10 mol% or more, more preferably 15 mol% or more, still more preferably 20 mol% or more. The vinyl content is preferably 70 mol% or less, more preferably 65 mol% or less, still more preferably 50 mol% or less.

The vinyl content herein refers to the vinyl content of the butadiene portion (the quantity of vinyl units in the butadiene structure) determined by $^1$H-NMR analysis.

To more suitably achieve the effects of the present invention, the SBR preferably has a glass transition temperature (Tg) of -90°C or higher, more preferably -50°C or higher. The Tg is also preferably 0°C or lower, more preferably -10°C or lower.

The glass transition temperature herein is measured at a rate of temperature rise of 10°C/min with a differential scanning calorimeter (Q200 available from TA Instruments Japan Inc.) in accordance with JIS-K7121.

To more suitably achieve the effects of the present invention, the SBR preferably has a weight average molecular weight (Mw) of 200,000 or more, more preferably 250,000 or more, still more preferably 300,000 or more, particularly preferably 1,000,000 or more. The Mw is also preferably 2,000,000 or less, more preferably 1,800,000 or less.

The weight average molecular weight (Mw) herein may be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The amount of the SBR, if present, based on 100% by mass of the rubber component is preferably 20% by mass or more, more preferably 30% by mass or more, still more preferably 50% by mass or more, further more preferably 70% by mass or more. The amount is preferably 95% by mass or less, more preferably 90% by mass or less. When the amount of the SBR is within the range indicated above, sufficient abrasion resistance, grip performance, and reversion resistance can be achieved.

Here, the amount of the SBR refers to the amount of the solids of the SBR based on 100% by mass of the solids of the total rubbers present.

The combined amount of the BR and the SBR based on 100% by mass of the rubber component is preferably 80% by mass or more, more preferably 90% by mass or more, still more preferably 95% by mass or more, and may be 100% by mass. With a combined amount within the range indicated above, the effects of the present invention can be more suitably achieved.

The masterbatch contains sulfur and a resin having an acid value of 5 or higher. The incorporation of such a masterbatch into a rubber composition makes it possible to improve tensile properties and fuel economy as compared to a rubber composition prepared by simply mixing the sulfur and resin. Thus, the rubber composition provides a balanced improvement in tensile properties, fuel economy, and abrasion resistance. The present invention also encompasses such a masterbatch containing sulfur and a resin having an acid value of 5 or higher. Moreover, the masterbatch may be incorporated into a rubber composition, as described above. The present invention also encompasses a method of using as an additive to rubber such a masterbatch containing sulfur and a resin having an acid value of 5 or higher.

The resin refers to a hydrocarbon oligomer containing a carboxyl group.

The masterbatch may contain compounding agents commonly used in the tire industry to an extent that does not impair the effects of the present invention as long as the masterbatch contains sulfur and a resin having an acid value of 5 or higher. However, the masterbatch is preferably free from any diene rubber. If the masterbatch contains a diene rubber, it physically inhibits the formation of ionic bonds between the resin having an acid value of 5 or higher and sulfur as the diene rubber and sulfur are not ionically bonded to each other. Further, when the masterbatch is introduced during the final kneading step in the preparation of a rubber composition, the diene rubber into which silica or carbon black hardly penetrates can easily initiate fracture. Thus, in another suitable embodiment of the present invention, the masterbatch is free from any diene rubber.

The resin has an acid value (mg KOH/g) of 5 or higher. The use of a resin having such an acid value facilitates ionic binding and adsorption of sulfur to the resin so that the sulfur surface can become hydrophobic, which promotes dispersion of sulfur into the resin. Thus, it is possible to prepare a masterbatch in which sulfur is micro-dispersed in the resin and which is easy to mix into a rubber composition, so that the effects of the present invention can be achieved. The acid value is preferably 10 or higher, more preferably 15 or higher, still more preferably 20 or higher, particularly preferably 25 or higher. Moreover, from the standpoint of dispersibility of the resin, the upper limit of the acid value is preferably 500 or lower, more preferably 250 or lower, still more preferably 200 or lower, further more preferably 180 or lower.

The acid value of the resin herein represents the amount of potassium hydroxide in milligrams required to neutralize the acids present in 1 g of the resin and is measured by potentiometric titration (JIS K 0070:1992).

The resin preferably has a softening point of 50°C or higher, more preferably 60°C or higher, still more preferably 70°C or higher. The softening point is also preferably 140°C or lower, more preferably 120°C or lower. The resin having a softening point within the range indicated above can be highly dispersed in the rubber composition.

The softening point herein is determined using a flow tester (CFT-500D available from Shimadzu Corporation) as follows: while heating at a rate of temperature rise of 6°C/min, a 1 g sample of the resin is extruded through a nozzle 1 mm in diameter and 1 mm in length by applying a load of 1.96 MPa with a plunger, and the amount of downward movement of the plunger of the flow tester is plotted against temperature. The temperature at which a half of the sample flowed out is defined as the softening point.

The resin preferably has a SP value of 9.2 or more, more preferably 10 or more. The SP value is also preferably 13 or less, more preferably 12 or less. The resin having a SP value within the range indicated above can be highly dispersed in the rubber composition (rubber masterbatch).

The SP value herein refers to a solubility parameter calculated from Hansen's equation.

The resin may be any one commonly used in the tire industry, and examples include aromatic vinyl polymers, coumarone-indene resins, coumarone resins, indene resins, phenol resins, rosin-based resins, petroleum resins, terpene-based resins, p-t-butylphenol acetylene resins, and acrylic resins. Commercial products of such resins include products from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX energy, Arakawa Chemical Industries, Ltd., Taoka Chemical Co., Ltd., Toagosei Co., Ltd., and Harima Chemicals Group, Inc. These may be used alone, or two or more of these may be used in combination. Preferred among these are rosin-based resins, acrylic resins, aromatic vinyl polymers, coumarone-indene resins, and terpene-based resins, with rosin-based resins and acrylic resins being more preferred. Particularly, rosin-based resins are particularly preferred because they have an acid value of 5 or higher and can disperse well in rubber, so that the effects of the present invention can be suitably achieved. When the resin is a rosin-based resin, the carboxyl groups of the rosin-based resin facilitate adsorption and dispersion of sulfur to the resin. Further, the polycyclic structures and branched chains of the rosin-based resin absorb free radicals generated during the dispersion of sulfur in the resin, thereby reducing polymer cleavage. This allows an appropriate shearing torque to be applied to sulfur, thereby promoting dispersion of sulfur. It is thus believed that the use of a masterbatch in which a rosin-based resin and sulfur are ionically bonded together improves dispersion of sulfur.

The aromatic vinyl polymers refer to resins produced by polymerizing α-methylstyrene and/or styrene. Examples include styrene homopolymers (styrene resins), α-methylstyrene homopolymers (a-methylstyrene resins), copolymers of α-methylstyrene and styrene, and copolymers of styrene and additional monomers.

The coumarone-indene resins refer to resins that contain coumarone and indene as primary monomer components constituting the skeleton (backbone) of the resins. Examples of monomer components other than coumarone and indene which may be contained in the skeleton include styrene, α-methylstyrene, methylindene, and vinyltoluene.

The indene resins refer to resins that contain indene as a primary monomer component constituting the skeleton (backbone) of the resins.

Examples of the phenol resins include those produced by reaction of phenols with aldehydes such as formaldehyde, acetaldehyde, or furfural in the presence of acid or alkali catalysts. Preferred among these are phenol resins produced by reaction in the presence of acid catalysts (e.g., novolac-type phenol resins).

The rosin-based resins can be obtained as, for example, solid hydrocarbons secreted from trees such as coniferous trees (e.g., pine trees), and contain resin acids having reactive double bonds. The resin acids refer to compounds containing carboxyl groups derived from trees. Specific examples of the resin acids having reactive double bonds include abietic acid, palustric acid, neoabietic acid, levopimaric acid, pimaric acid, isopimaric acid, dehydroabietic acid, and dihydroabietic acid. Such rosin-based resins are classified according to whether or not they are modified. Specifically, they may be unmodified rosins (non-modified rosins) or modified rosins (rosin derivatives).

Examples of the unmodified rosins include tall rosins (also known as tall oil rosins), gum rosins, wood rosins, disproportionated rosins, polymerized rosins, hydrogenated rosins, and other chemically modified rosins. These unmodified rosins may be used alone, or two or more of these may be used in combination. Preferred unmodified rosins are tall rosins and gum rosins.

The modified rosins refer to modified products of any of the above-described unmodified rosins, and examples include rosin esters, unsaturated carboxylic acid-modified rosins, unsaturated carboxylic acid-modified rosin esters, rosin amide compounds, rosin amine salts, rosin-modified petroleum resins, and rosin-modified phenol resins.

The rosin esters may be produced, for example, by reacting the above-described unmodified rosins with polyols by known esterification processes.

Examples of the polyols include dihydric alcohols such as ethylene glycol, propylene glycol, neopentyl glycol, trimethylene glycol, tetramethylene glycol, 1,3-butanediol, and 1,6-hexanediol; trihydric alcohols such as glycerol, trimethylolpropane, trimethylolethane, and triethylolethane; tetrahydric alcohols such as pentaerythritol and dipentaerythritol; and amino alcohols such as triethanolamine, tripropanolamine, triisopropanolamine, N-isobutyldiethanolamine, and N-normal butyl diethanolamine. These polyols may be used alone, or two or more of these may be used in combination.

The unmodified rosins and the polyols may be incorporated in such a manner that the molar ratio of the hydroxy groups of the polyols to the carboxyl groups of the unmodified rosins (OH/COOH) is, for example, 0.2 to 1.2. The unmodified rosins and the polyols may be reacted at a temperature of, for example, 150 to 300°C for a duration of, for example, 2 to 30 hours. In such reactions, known catalysts may be added at appropriate levels, if necessary.

The unsaturated carboxylic acid-modified rosins may be produced, for example, by reacting the above-described unmodified rosins with α,β-unsaturated carboxylic acids by known processes.

Examples of the α,β-unsaturated carboxylic acids include α,β-unsaturated carboxylic acids per se and acid anhydrides thereof. Specific examples include fumaric acid, maleic acid, maleic anhydride, itaconic acid, citraconic acid, citraconic anhydride, acrylic acid, and methacrylic acid. These α,β-unsaturated carboxylic acids may be used alone, or two or more of these may be used in combination. The unmodified rosins and the α,β-unsaturated carboxylic acids may be incorporated in such a ratio that the amount of the α,β-unsaturated carboxylic acids is, for example, 1 mol or less per mole of the unmodified rosins. The unmodified rosins and the α,β-unsaturated carboxylic acids may be reacted at a temperature of, for example, 150 to 300°C for a duration of, for example, 1 to 24 hours. In such reactions, known catalysts may be added at appropriate levels, if necessary.

The unsaturated carboxylic acid-modified rosin esters may be produced, for example, by reacting the above-described unmodified rosins sequentially or simultaneously with the above-described polyols and the above-described α,β-unsaturated carboxylic acids.

When the components are sequentially reacted, the unmodified rosins may be first reacted with the polyols and then with the α,β-unsaturated carboxylic acids, or alternatively, the unmodified rosins may be first reacted with the α,β-unsaturated carboxylic acids and then with the polyols. The esterification reactions between the unmodified rosins and the polyols and the modification reactions between the unmodified rosins and the α,β-unsaturated carboxylic acids may be performed under conditions as described above.

The rosin amide compounds may be produced, for example, by reacting the above-described unmodified rosins with amidating agents.

Examples of the amidating agents include primary and/or secondary polyamine compounds, polyoxazoline compounds, and polyisocyanate compounds.

The primary and/or secondary polyamine compounds refer to compounds containing two or more primary and/or secondary amino groups per molecule, which can undergo condensation reactions with the carboxyl groups present in unmodified rosins to amidate the rosins. Specific examples of such polyamine compounds include acyclic diamines such as ethylenediamine, N-ethylaminoethylamine, 1,2-propanediamine, 1,3-propanediamine, N-methyl-1,3-propanediamine, bis(3-aminopropyl)ether, 1,2-bis(3-aminopropoxy)ethane, 1,3-bis(3-aminopropoxy)-2,2-dimethylpropane, 1,4-diaminobutane, and laurylaminopropylamine; cyclic diamines such as 2-aminomethylpiperidine, 4-aminomethylpiperidine, 1,3-di(4-piperidyl)propane, and homopiperazine; polyamines such as diethylenetriamine, triethylenetetramine, iminobispropylamine, and methyliminobispropylamine; and hydrohalic acid salts of the foregoing. These primary and/or secondary polyamine compounds may be used alone, or two or more of these may be used in combination.

The polyoxazoline compounds refer to compounds containing two or more polyoxazoline rings per molecule, which can undergo addition reactions with the carboxyl groups present in unmodified rosins to amidate the rosins. Examples of such polyoxazoline compounds include 2,2'-(1,3-phenylene)-bis(2-oxazoline). These polyoxazoline compounds may be used alone, or two or more of these may be used in combination.

The polyisocyanate compounds refer to compounds containing two or more isocyanate groups per molecule, which can undergo addition condensation decarbonation reactions with the carboxyl groups present in unmodified rosins to amidate the rosins. Examples of such polyisocyanate compounds include aromatic diisocyanates such as tolylene diisocyanate (2,4- or 2,6-tolylene diisocyanate or mixtures thereof), phenylene diisocyanate (m- or p-phenylene diisocyanate or mixtures thereof), 1,5-naphthalene diisocyanate, diphenylmethane diisocynate (4,4'-, 2,4'-, or 2,2'-diphenylmethane diisocynate or mixtures thereof), and 4,4'-toluidine diisocyanate; araliphatic diisocyanates such as xylylene diisocyanate (1,3- or 1,4-xylylene diisocyanate or mixtures thereof) and tetramethylxylylene diisocyanate (1,3- or 1,4-tetramethylxylylene diisocyanate or mixtures thereof); aliphatic diisocyanates such as 1,3-trimethylene diisocyanate, 1,4-tetramethylene diisocyanate, 1,5-pentamethylene diisocyanate, and 1,6-hexamethylene diisocyanate; and alicyclic diisocyanates such as cyclohexane diisocyanate, 3-isocyanatomethyl-3,5,5-trimethylcyclohexyl isocyanate (isophorone diisocyanate), methylene-bis(cyclohexyl isocyanate), norbornane diisocyanate, and bis(isocyanatomethyl)cyclohexane; and other diisocyanates, as well as derivatives thereof (e.g., multimers, polyol adducts). These polyisocyanate compounds may be used alone, or two or more of these may be used in combination.

The foregoing amidating agents may be used alone, or two or more of them may be used in combination.

The unmodified rosins and the amidating agents may be incorporated in such a manner that the molar ratio of the active groups (primary and/or secondary amino groups, polyoxazoline rings, or isocyanate groups) of the amidating agents to the carboxyl groups of the unmodified rosins (OH/active group) is, for example, 0.2 to 1.2. The unmodified rosins and the polyols may be reacted at a temperature of, for example, 120 to 300°C for a duration of, for example, 2 to 30 hours. In such reactions, known catalysts may be added at appropriate levels, if necessary.

The rosin amine salts may be produced by neutralizing the carboxyl groups present in unmodified rosins with tertiary amine compounds.

Examples of the tertiary amine compounds include tri(C1-C4 alkyl)amines such as trimethylamine and trimethylamine, and heterocyclic amines such as morpholine. These tertiary amine compounds may be used alone, or two or more of these may be used in combination.

Moreover, other examples of the modified rosins include rosin-modified petroleum resins, rosin-modified phenols (rosin-modified phenol resins), and rosin alcohols prepared by reducing carboxyl groups of rosin-based resins (e.g., unmodified rosins, unsaturated carboxylic acid-modified rosins). These modified rosins may be used alone, or two or more of these may be used in combination. Preferred modified rosins are rosin esters and unsaturated carboxylic acid-modified rosins.

With regard to the rosin-modified phenol resins, examples of the rosins used for modification include gum rosins, wood rosins, and tall rosins, and examples of the phenol resins to be modified include novolac phenol resins, resol phenol resins, and novolac-resol phenol resins.

The rosin-based resins may be used alone, or two or more of them may be used in combination.

Among the rosin-based resins, gum rosins, tall rosins, and modified gum rosins are preferred in order to more suitably achieve the effects of the present invention. More preferred are gum rosins, tall rosins, and rosin esters, unsaturated carboxylic acid-modified rosins, or unsaturated carboxylic acid-modified rosin esters of gum rosins. Suitable examples of these include maleic acid-modified rosins and maleic anhydride-modified rosins.

Examples of the petroleum resins include C5 resins, C9 resins, C5/C9 resins, and dicyclopentadiene (DCPD) resins.

Examples of the terpene-based resins include polyterpene resins produced by polymerization of terpene compounds; aromatic modified terpene resins produced by polymerization of terpene compounds and aromatic compounds; and hydrogenated products of the foregoing resins.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as, for example, a monoterpene $(C_{10}H_{16})$, sesquiterpene $(C_{15}H_{24})$, or diterpene $(C_{20}H_{32})$ Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above terpene compounds, such as pinene resins, limonene resins, dipentene resins, and pinene-limonene resins. Preferred among these are pinene resins because their polymerization reaction is simple, and also because they are made from natural pine resin and thus available at low cost. Pinene resins, which usually contain two isomers, i.e., α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above terpene compounds and phenolic compounds; and terpene styrene resins made from the above terpene compounds and styrenic compounds. Terpene phenol styrene resins made from the above terpene compounds, phenolic compounds, and styrenic compounds may also be used. Examples of the phenolic compounds include phenol, bisphenol A, cresol, and xylenol. Examples of the styrenic compounds include styrene and α-methylstyrene.

Examples of the p-t-butylphenol acetylene resins include resins produced by condensation of p-t-butylphenol and acetylene.

Examples of the acrylic monomer components of the acrylic resins include (meth)acrylic acids and (meth)acrylic acid derivatives such as (meth)acrylic acid esters (e.g., alkyl esters such as 2-ethylhexyl acrylate, aryl esters, aralkyl esters), (meth)acrylamides, and (meth)acrylamide derivatives. The term "(meth)acrylic acid" is a general term for acrylic acid and methacrylic acid.

In addition to (meth)acrylic acids or (meth)acrylic acid derivatives, the monomer components of the acrylic resins may further include aromatic vinyls such as styrene, α-methylstyrene, vinyltoluene, vinylnaphthalene, divinylbenzene, trivinylbenzene, and divinylnaphthalene.

The acrylic resins may be formed only of (meth)acrylic components or may further contain constituent components other than (meth)acrylic components. Moreover, the acrylic resins may have a hydroxyl group, a carboxyl group, a silanol group, or other groups.

Examples of the sulfur include those commonly used in the rubber industry, such as powdered sulfur, precipitated sulfur, colloidal sulfur, insoluble sulfur, highly dispersible sulfur, and soluble sulfur. Commercial products of the sulfur include products from Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd. These may be used alone, or two or more of these may be used in combination.

The masterbatch can be prepared by melt-mixing the sulfur and the resin having an acid value of 5 or higher.

The mixing is preferably carried out by melting the resin having an acid value of 5 or higher at a high temperature, introducing sulfur in small portions into the molten resin, and mixing them while checking whether they are dissolved.

In the masterbatch, the sulfur and the resin having an acid value of 5 or higher are preferably present in a ratio (mass ratio) of the sulfur (solid content) to the resin having an acid value of 5 or higher of 1:0.05 to 10, more preferably 1:0.1 to 7, still more preferably 1:0.5 to 5. With a ratio within the range indicated above, the effects of the present invention can be more suitably achieved.

The amount of the sulfur (solid content) in the masterbatch is preferably 10% by mass or more, more preferably 12% by mass or more, still more preferably 15% by mass or more, particularly preferably 20% by mass or more, based on 100% by mass of the masterbatch. The amount is also preferably 90% by mass or less, more preferably 80% by mass or less, still more preferably 70% by mass or less. The amount is particularly preferably about 30 to 60% by mass. With an amount within the range indicated above, the effects of the present invention can be more suitably achieved.

The amount of the resin having an acid value of 5 or higher in the masterbatch is preferably 10% by mass or more, more preferably 20% by mass or more, still more preferably 30% by mass or more, based on 100% by mass of the masterbatch. The amount is also preferably 90% by mass or less, more preferably 85% by mass or less, still more preferably 80% by mass or less. The amount is particularly preferably about 40 to 70% by mass. With an amount within the range indicated above, the effects of the present invention can be more suitably achieved.

The amount of the masterbatch per 100 parts by mass of the rubber component is preferably 1.0 part by mass or more, more preferably 2.0 parts by mass or more, still more preferably 2.5 parts by mass or more, particularly preferably 3.0 parts by mass or more. The amount is also preferably 20 parts by mass or less, more preferably 15 parts by mass or less, still more preferably 12 parts by mass or less, particularly preferably 10 parts by mass or less. With an amount within the range indicated above, the effects of the present invention can be more suitably achieved.

Examples of the silica include dry silica (anhydrous silica) and wet silica (hydrous silica). Among these, wet silica is preferred because it contains a large number of silanol groups. Commercial products of the silica include products from Degussa, Rhodia, Tosoh Silica Corporation, Solvay Japan, and Tokuyama Corporation. These may be used alone, or two or more of these may be used in combination.

The amount of the silica per 100 parts by mass of the rubber component is preferably 30 parts by mass or more, more preferably 50 parts by mass or more, still more preferably 55 parts by mass or more, further more preferably 60 parts by mass or more. The use of an appropriate amount of silica tends to provide good wet grip performance and handling stability to passenger vehicle tires. The upper limit of the amount of the silica is not particularly limited, but is preferably 300 parts by mass or less, more preferably 200 parts by mass or less, still more preferably 170 parts by mass or less, particularly preferably 150 parts by mass or less. When an upper limit is placed on the amount of the silica, good abrasion resistance and fuel economy tend to be achieved.

The silica preferably has a nitrogen adsorption specific surface area ($N_2SA$) of 70 $m^2$/g or more, more preferably 140 $m^2$/g or more, still more preferably 160 $m^2$/g or more. When the amount is not less than the lower limit, good wet grip performance and tensile strength at break tend to be achieved. Moreover, the upper limit of the $N_2SA$ of the silica is not particularly limited, but is preferably 500 $m^2$/g or less, more preferably 300 $m^2$/g or less, still more preferably 280 $m^2$/g or less. When the amount is not more than the upper limit, good silica dispersibility tends to be achieved.

The $N_2SA$ of the silica is measured by the BET method in accordance with ASTM D3037-93.

When the rubber composition contains silica, it preferably further contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products of the silane coupling agent include products from Degussa, Momentive, Shin-Etsu Silicones, Tokyo Chemical Industry Co., Ltd., AZmax. Co, and Dow Corning Toray Co., Ltd. These may be used alone, or two or more of these may be used in combination.

The amount of the silane coupling agent per 100 parts by mass of the silica is preferably 3 parts by mass or more, more preferably 6 parts by mass or more. When the amount is 3 parts by mass or more, good properties such as tensile strength at break tend to be achieved. The amount is also preferably 12 parts by mass or less, more preferably 10 parts by mass or less. When the amount is 12 parts by mass or less, an effect commensurate with the amount tends to be obtained.

Non-limiting examples of the carbon black include N134, N110, N220, N234, N219, N339, N330, N326, N351, N550, and N762. Commercial products of the carbon black include products from Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon. These may be used alone, or two or more of these may be used in combination.

The amount of the carbon black per 100 parts by mass of the rubber component is preferably 1 part by mass or more, more preferably 3 parts by mass or more. When the amount is not less than the lower limit, good UV cracking resistance and good abrasion resistance tend to be achieved. For use in passenger vehicles emphasizing wet grip performance, the amount of the carbon black is also preferably 10 parts by mass or less, more preferably 7 parts by mass or less. When the amount is not more than the upper limit, the rubber composition tends to provide good wet grip performance and fuel economy.

The carbon black preferably has a nitrogen adsorption specific surface area ($N_2SA$) of 50 $m^2$/g or more, more

preferably 80 m$^2$/g or more, still more preferably 100 m$^2$/g or more. When the amount is not less than the lower limit, good abrasion resistance and grip performance tend to be achieved. The N$_2$SA is also preferably 200 m$^2$/g or less, more preferably 150 m$^2$/g or less, still more preferably 130 m$^2$/g or less. When the amount is not more than the upper limit, the carbon black tends to disperse well.

The nitrogen adsorption specific surface area of the carbon black is determined in accordance with JIS K 6217-2:2001.

In the rubber composition, the combined amount of the silica and carbon black per 100 parts by mass of the rubber component is preferably 30 parts by mass or more, more preferably 40 parts by mass or more. For use in passenger vehicles, the combined amount is still more preferably 80 parts by mass or more. The combined amount is also preferably 300 parts by mass or less, more preferably 200 parts by mass or less, still more preferably 160 parts by mass or less. When the combined amount of the silica and carbon black is within the range indicated above, the reinforcement effect of these fillers as well as abrasion resistance, fuel economy, and tensile properties can be sufficiently achieved.

The rubber composition may contain an additional filler other than silica and carbon black. Non-limiting examples of the additional filler include calcium carbonate, talc, alumina, clay, aluminum hydroxide, aluminum oxide, magnesium sulfate, and graphite.

The rubber composition may contain a plasticizer. Non-limiting examples of the plasticizer include oils, liquid polymers (liquid diene polymers), and liquid resins. These plasticizers may be used alone, or two or more of these may be used in combination.

The oils may be any conventional oil, including, for example, process oils such as paraffinic process oils, aromatic process oils, and naphthenic process oils; low polycyclic aromatic (PCA) process oils such as TDAE and MES; vegetable oils; and mixtures thereof. From the standpoint of abrasion resistance and properties at break, aromatic process oils are preferred among these. Specific examples of the aromatic process oils include Diana Process Oil AH series available from Idemitsu Kosan Co., Ltd.

The liquid polymers (liquid diene polymers) refer to diene polymers that are liquid at room temperature (25°C).

The liquid diene polymers preferably have a polystyrene-equivalent weight average molecular weight (Mw) of $1.0 \times 10^3$ to $2.0 \times 10^5$, more preferably $3.0 \times 10^3$ to $1.5 \times 10^4$ as measured by gel permeation chromatography (GPC).

The Mw of the liquid diene polymers herein is determined by gel permeation chromatography (GPC) calibrated with polystyrene standards.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR).

Non-limiting examples of the liquid resins include liquid aromatic vinyl polymers, coumarone-indene resins, indene resins, terpene resins, and rosin resins, and hydrogenated products thereof.

The liquid aromatic vinyl polymers refer to resins produced by polymerizing α-methylstyrene and/or styrene. Examples include liquid resins such as styrene homopolymers, α-methylstyrene homopolymers, and copolymers of α-methylstyrene and styrene.

The liquid coumarone-indene resins refer to resins that contain coumarone and indene as primary monomer components constituting the skeleton (backbone) of the resins. Examples include liquid resins which may contain, in addition to coumarone and indene, styrene, α-methylstyrene, methylindene, vinyltoluene, or other monomer components in the skeleton.

The liquid terpene resins refer to liquid terpene-based resins typified by resins produced by polymerization of terpene compounds such as α-pinene, β-pinene, camphene, and dipentene; and terpene phenol resins made from terpene compounds and phenolic compounds.

The liquid rosin resins refer to liquid rosin-based resins typified by natural rosins, polymerized rosins, and modified rosins, and ester compounds thereof, and hydrogenated products thereof.

In addition to the resin having an acid value of 5 or higher present in the masterbatch, the rubber composition may contain a solid resin (an oligomer that is solid at room temperature (25°C)).

The amount of the solid resin, if present, per 100 parts by mass of the rubber component is preferably 1 part by mass or more, more preferably 3 parts by mass or more, still more preferably 5 parts by mass or more. The amount is also preferably 50 parts by mass or less, more preferably 40 parts by mass or less, still more preferably 30 parts by mass or less. With an amount within the range indicated above, good wet grip performance tends to be achieved.

Non-limiting examples of the solid resin include those as described for the resin having an acid value of 5 or higher used in the masterbatch. Preferred examples include rosin-based resins, polyterpene resins, aromatic modified terpene resins such as terpene phenol resins, coumarone-indene resins, aromatic vinyl polymers, and petroleum resins such as dicyclopentadiene resins (DCPD resins), C5 petroleum resins, C9 petroleum resins, and C5/C9 petroleum resins.

From the standpoint of properties such as crack resistance and ozone resistance, the rubber composition preferably contains an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine and quinoline antioxidants, with N-(1,3-dimethylbutyl)-N'-phenyl-p-phenylenediamine or 2,2,4-trimethyl-1,2-dihydroquinoline polymer being more preferred. Commercial products of the antioxidant include products from Seiko Chemical Co., Ltd., Sumitomo Chemical Co., Ltd., Ouchi Shinko Chemical Industrial Co., Ltd., and Flexsys.

The amount of the antioxidant per 100 parts by mass of the rubber component is preferably 0.5 parts by mass or more, more preferably 1.0 part by mass or more. When the amount is not less than the lower limit, sufficient ozone resistance tends to be achieved. The amount is preferably 7.0 parts by mass or less, more preferably 6.0 parts by mass or less. When the amount is not more than the upper limit, good tire appearance and fuel economy tend to be achieved.

The rubber composition preferably contains a fatty acid such as stearic acid or oleic acid. From the standpoint of the balance of the properties, the amount of the fatty acid per 100 parts by mass of the rubber component is preferably 0.5 to 10 parts by mass, more preferably 0.5 to 5 parts by mass.

The stearic acid may be a conventional one, and examples include products from NOF Corporation, Kao Corporation, Fujifilm Wako Pure Chemical Corporation, and Chiba Fatty Acid Co., Ltd.

The rubber composition preferably contains zinc oxide. From the standpoint of the balance of the properties, the amount of the zinc oxide per 100 parts by mass of the rubber component is preferably 0.5 to 10 parts by mass, more preferably 1 to 5 parts by mass.

The zinc oxide may be a conventional one, and examples include products from Mitsui Mining & Smelting Co., Ltd., Toho Zinc Co., Ltd., Hakusui Tech Co., Ltd., Seido Chemical Industry Co., Ltd., and Sakai Chemical Industry Co., Ltd.

The rubber composition may contain a wax. Non-limiting examples of the wax include petroleum waxes and natural waxes, as well as synthetic waxes produced by purifying or chemically treating a plurality of waxes. These waxes may be used alone, or two or more of these may be used in combination.

Examples of the petroleum waxes include paraffin waxes and microcrystalline waxes. The natural waxes may be any wax other than those derived from petroleum resources. Examples include vegetable waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these waxes. Commercial products of the wax include products from Ouchi Shinko Chemical Industrial Co., Ltd., Nippon Seiro Co., Ltd., and Seiko Chemical Co., Ltd. The amount of the wax may be appropriately selected in view of ozone resistance and cost.

The rubber composition may further contain sulfur in addition to the sulfur present in the masterbatch.

When the rubber composition further contains sulfur in addition to the sulfur present in the masterbatch, the combined amount of both, i.e., the total sulfur content of the rubber composition is preferably 0.7 parts by mass or more, more preferably 1.0 part by mass or more, still more preferably 1.5 parts by mass or more, per 100 parts by mass of the rubber component. For use in topping rubbers having a high sulfur content, the total sulfur content is preferably 7 parts by mass or less, more preferably 6 parts by mass or less, still more preferably 5.6 parts by mass or less, while for use in tread compounds, the total sulfur content is preferably 3 parts by mass or less, more preferably 2.5 parts by mass or less, still more preferably 2.2 parts by mass or less. When the total sulfur content is within the range indicated above, good properties (tensile properties, fuel economy, and abrasion resistance) tend to be achieved.

When sulfur is added in addition to the sulfur present in the masterbatch, it may be any sulfur, including those usable in the masterbatch such as powdered sulfur, insoluble sulfur, and zinc oxide-containing powdered sulfur.

The rubber composition preferably contains a vulcanization accelerator.

The amount of the vulcanization accelerator is not particularly limited and may be freely selected according to the desired cure rate or crosslink density. The amount is usually 0.3 to 10 parts by mass, preferably 0.5 to 7 parts by mass, per 100 parts by mass of the rubber component.

The vulcanization accelerator may be of any type, including those commonly used. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. From the standpoint of the balance of the properties, sulfenamide vulcanization accelerators and guanidine vulcanization accelerators are preferred among these.

From the standpoint of tensile properties, the amount of the vulcanization accelerator which is a thiazole vulcanization accelerator is preferably 1.5 parts by mass or less per 100 parts by mass of the rubber component. Thus, in another suitable embodiment of the present invention, the rubber composition contains a thiazole vulcanization accelerator in an amount of 1.5 parts by mass or less per 100 parts by mass of the rubber component.

In addition to the above-mentioned components, the rubber composition may appropriately contain other compounding agents commonly used in the tire industry, such as release agents.

The rubber composition may be prepared by known methods. For example, it may be prepared by kneading the components using a rubber kneading machine such as an open roll mill or a Banbury mixer, and vulcanizing the kneaded mixture.

The rubber composition is usually prepared by a method including: a base kneading step of kneading a rubber component (diene polymer) and additives (e.g., fillers such as carbon black) other than crosslinking agents (vulcanizing agents) and vulcanization accelerators; and a final kneading step of kneading the kneaded mixture prepared in the base kneading step and a crosslinking agent (and preferably a vulcanization accelerator). From the standpoint of increasing rubber viscosity and from the standpoint of tensile properties, the masterbatch according to the present invention is preferably introduced and kneaded in the final kneading step.

The kneading conditions are as follows. In the base kneading step, the kneading temperature is usually 130 to 200°C, preferably 140 to 190°C, and the kneading duration is usually 30 seconds to 30 minutes, preferably 1 minute to 20 minutes. In the final kneading step, the kneading temperature is usually 115°C or lower and is preferably 60 to 95°C in roll kneading.

Usually, the composition obtained after kneading vulcanizing agents and vulcanization accelerators is vulcanized by, for example, press vulcanization. The vulcanization temperature is usually 130 to 200°C, preferably 140 to 190°C.

The rubber composition is suitable for use in treads (cap treads, base treads), and it may also be used in tire components other than treads, such as sidewalls, undertreads, clinch apexes, beadapexes, breaker cushion rubbers, rubbers for carcass cord topping, insulations, chafers, and innerliners, as well as side reinforcement layers of run-flat tires.

The rubber composition is suitable for use in pneumatic tires. Such a pneumatic tire can be produced from the rubber composition by conventional methods. Specifically, the unvulcanized rubber composition containing the components may be extruded into the shape of a tire component such as a tread, and assembled with other tire components on a tire building machine in a usual manner to build an unvulcanized tire, which may then be heated and pressurized in a vulcanizer to produce a tire.

The pneumatic tire may be used as, for example, a tire for passenger vehicles, large passenger vehicles, large SUVs, heavy duty vehicles such as trucks and buses, light trucks, or motorcycles, or as a racing tire (high performance tire), a winter tire, or a run-flat tire.

EXAMPLES

The present invention is specifically described with reference to, but not limited to, examples.

<Preparation of terminal modifier>

An amount of 20.8 g of 3-(N,N-dimethylamino)propyltrimethoxysilane (AZmax. Co) was put in a 250 mL graduated flask in a nitrogen atmosphere, and then anhydrous hexane (Kanto Chemical Co., Inc.) was added to a total volume of 250 mL.

(Copolymer Production Example 1)

A sufficiently nitrogen-purged 30 L pressure-proof vessel was charged with 18 L of cyclohexane (Kanto Chemical Co., Inc.), 2,000 g of butadiene (TAKACHIHO TRADING CO., LTD.), and 53 mmol of diethyl ether (Kanto Chemical Co., Inc.), and the contents were heated to 60°C. Next, 16.6 mL of butyllithium (Kanto Chemical Co., Inc.) was added and stirred for three hours. Subsequently, 12 mL of a 0.4 mol/L solution of silicon tetrachloride in hexane was added and stirred for 30 minutes. Thereafter, 13 mL of the terminal modifier was added and stirred for 30 minutes. To the reaction solution was added 2 mL of a solution of 0.2 g of 2,6-tert-butyl-p-cresol (Ouchi Shinko Chemical Industrial Co., Ltd.) in methanol (Kanto Chemical Co., Inc.). The resulting reaction solution was put in a stainless steel vessel containing 18 L of methanol to collect an aggregate. The aggregate was dried under reduced pressure for 24 hours to give a modified BR which was found to have a Mw of 420,000 and a vinyl content of 13 mol%.

<Preparation of masterbatch>

(Masterbatch Preparation Example 1)

A flask was placed in a silicone oil bath (160°C), and 100 g of HARITACK 4740 (rosin ester, acid value: 35 mg KOH/g, softening point: 115°C, SP value: 10.4) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARITACK 4740 to the powdered sulfur (solid content) was 1:1, while taking care not to lower the temperature of HARITACK 4740 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 1 was prepared.

(Masterbatch Preparation Example 2)

A flask was placed in a silicone oil bath (160°C), and 100 g of crude gum rosin (gum rosin, acid value: 168 mg KOH/g, softening point: 78°C, SP value: 10.6) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of the crude gum rosin to the powdered sulfur (solid content) was 1:1, while taking care not to lower the temperature of the crude gum rosin by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 2 was prepared.

(Masterbatch Preparation Example 3)

A flask was placed in a silicone oil bath (160°C), and 100 g of HARIMACK T-80 (rosin-modified maleic acid resin (maleic acid-modified rosin), acid value: 185 mg KOH/g, softening point: 85°C, SP value: 10.9) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARIMACK T-80 to the powdered sulfur (solid content) was 1:1, while taking care not to lower the temperature of HARIMACK T-80 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 3 was prepared.

(Masterbatch Preparation Example 4)

A flask was placed in a silicone oil bath (160°C), and 100 g of HARITACK 4740 (rosin ester, acid value: 35 mg KOH/g, softening point: 115°C, SP value: 10.4) available from Harima Chemicals Group, Inc. was melted therein in advance. Under electric stirring, 210 g of powdered sulfur (HK200-1 (1.5% oil-containing powdered sulfur) available from Hosoi Chemical Industry Co., Ltd.) was successively introduced so that the mass ratio of HARITACK 4740 to the powdered sulfur (solid content) was 1:2, while taking care not to lower the temperature of HARITACK 4740 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 4 was prepared.

(Masterbatch Preparation Example 5)

A flask was placed in a silicone oil bath (160°C), and 200 g of HARIESTER TF (rosin ester, acid value: 10 mg KOH/g, softening point: 80°C, SP value: 10.4) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARIESTER TF to the powdered sulfur (solid content) was 2:1, while taking care not to lower the temperature of HARIESTER TF by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 5 was prepared.

(Masterbatch Preparation Example 6)

A flask was placed in a silicone oil bath (160°C), and 400 g of HARIESTER TF (rosin ester, acid value: 10 mg KOH/g, softening point: 80°C, SP value: 10.4) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARIESTER TF to the powdered sulfur (solid content) was 4:1, while taking care not to lower the temperature of HARIESTER TF by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 6 was prepared.

(Masterbatch Preparation Example 7)

A flask was placed in a silicone oil bath (160°C), and 100 g of HARIESTER TF (rosin ester, acid value: 10 mg KOH/g, softening point: 80°C, SP value: 10.4) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARIESTER TF to the powdered sulfur (solid content) was 1:1, while taking care not to lower the temperature of HARIESTER TF by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 7 was prepared.

(Masterbatch Preparation Example 8)

A flask was placed in a silicone oil bath (160°C), and 100 g of HARIESTER P (rosin pentaerythritol ester, acid value: 12 mg KOH/g, softening point: 102°C, SP value: 10.4) available from Harima Chemicals Group, Inc. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of HARIESTER P to the powdered sulfur (solid content) was 1:1, while taking care not to lower the temperature of HARIESTER P by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 8 was prepared.

(Masterbatch Preparation Example 9)

A flask was placed in a silicone oil bath (100°C), and 100 g of ARUFON UC-3510 (solvent-free carboxyl group-containing acrylic resin, acid value: 70 mg KOH/g, liquid at room temperature, kinematic viscosity at 25°C: 5,000 mPa·s) available from TOAGOSEI Co., Ltd. was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of ARUFON UC-3510 to the powdered sulfur (solid content) was 1:1, while taking care not to lower the temperature of ARUFON UC-3510 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 9 was prepared.

(Masterbatch Preparation Example 10)

A flask was placed in a silicone oil bath (160°C), and 100 g of YS resin TO125 (aromatic modified terpene resin, acid value: 0 mg KOH/g, softening point: 125°C, SP value: 8.73) available from Yasuhara Chemical Co., Ltd. was melted therein in advance. Under electric stirring, 100 g of powdered sulfur (HK200-1 (1.5% oil-containing powdered sulfur) available from Hosoi Chemical Industry Co., Ltd.) was successively introduced so that the mass ratio of YS resin TO125 to the powdered sulfur (solid content) was 1:1, while taking care not to lower the temperature of YS resin TO125 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 10 was prepared.

(Masterbatch Preparation Example 11)

A flask was placed in a silicone oil bath (100°C), and 100 g of NOVARES C10 (coumarone-indene resin, acid value: 0 mg KOH/g, softening point: 10°C, SP value: 8.8) available from Rutgers Chemicals was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of NOVARES C10 to the powdered sulfur (solid content) was 1:1, while taking care not to lower the temperature of NOVARES C10 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 11 was prepared.

(Masterbatch Preparation Example 12)

A flask was placed in a silicone oil bath (160°C), and 100 g of Sylvares 4401 (copolymer of $\alpha$-methylstyrene and styrene, acid value: 0 mg KOH/g, softening point: 85°C, SP value: 9.1) available from Arizona Chemical was melted therein in advance. Under electric stirring, 105 g of powdered sulfur (HK200-1 (1.5% oil-containing powdered sulfur) available from Hosoi Chemical Industry Co., Ltd.) was successively introduced so that the mass ratio of Sylvares 4401 to the powdered sulfur (solid content) was 1:1, while taking care not to lower the temperature of Sylvares 4401 by 10°C or more. After the introduction, the mixture was stirred for 0.5 hours and then cooled with water to room temperature (20 to 30°C). After phase separation and solidification occurred, the product was taken out and ground in a mortar into particles having a size of 0.2 mm or smaller. Thus, a masterbatch 12 was prepared.

The chemicals other than the masterbatches 1 to 12 used in the examples and comparative examples are listed below.

SBR: NS616 (non-oil extended SBR, styrene content: 21% by mass, vinyl content: 66 mol%, Tg: -23°C, Mw: 240,000) available from Zeon Corporation

BR1: CB25 (rare earth-catalyzed BR synthesized with Nd catalyst, cis content: 96% by mass, Tg: -110°C) available from Lanxess

BR2: modified BR prepared in Copolymer Production Example 1 (vinyl content: 13 mol%, cis content: 38% by mass, trans content: 50% by mass, Mw/Mn: 1.19, Mw: 420,000)

CB: Shoblack N220 (carbon black, $N_2$SA: 114 $m^2$/g) available from Cabot Japan K.K.

Silica: ULTRASIL VN3 ($N_2$SA: 175 $m^2$/g) available from Degussa

Silane coupling agent: Si75 (bis(3-triethoxysilylpropyl)disulfide) available from Degussa

Wax: OZOACE 0355 (paraffin wax) available from Nippon Seiro Co., Ltd.

Stearic acid: TSUBAKI available from NOF Corporation

Antioxidant: Antigene 6C (N-(1,3-dimethylbutyl)-N'-phenyl-p-phenylenediamine) available from Sumitomo Chemical Co., Ltd.

Zinc oxide: Zinc oxide #2 available from Mitsui Mining and Smelting Co., Ltd.

Oil: Diana Process AH-24 (aromatic process oil) available from Idemitsu Kosan Co., Ltd.

HARITACK 4740: HARITACK 4740 (rosin ester, acid value: 35 mg KOH/g, softening point: 115°C, SP value: 10.4) available from Harima Chemicals Group, Inc.

TO125: YS resin TO125 (aromatic modified terpene resin (terpene styrene resin), acid value: 0 mg KOH/g, softening point: 125°C, SP value: 8.73) available from Yasuhara Chemical Co., Ltd.

C10: NOVARES C10 (coumarone-indene resin, acid value: 0 mg KOH/g, softening point: 10°C, SP value: 8.8) available from Ruetgers Chemicals

Sylvares 4401: Sylvares 4401 (copolymer of $\alpha$-methylstyrene and styrene, acid value: 0 mg KOH/g, softening point: 85°C, SP value: 9.1) available from Arizona Chemical

Sulfur: HK200-5 (5% oil-containing powdered sulfur) available from Hosoi Chemical Industry Co., Ltd.

Vulcanization accelerator 1: NOCCELER NS-G (N-tert-butyl-2-benzothiazolylsulfenamide) available from Ouchi Shinko Chemical Industrial Co., Ltd.

Vulcanization accelerator 2: NOCCELER D (1,3-diphenylguanidine) available from Ouchi Shinko Chemical Industrial Co., Ltd.

(Examples and Comparative Examples)

According to each of the formulations shown in Table 1, the chemicals other than the masterbatch, sulfur, and vulcanization accelerators were kneaded for five minutes at 150°C using a 1.7 L Banbury mixer available from Kobe Steel, Ltd. to give a kneaded mixture (base kneading step). Next, the masterbatch, sulfur, and vulcanization accelerators were added to the kneaded mixture, followed by kneading for five minutes using an open roll mill whose roll temperature was controlled at 70°C, thereby giving an unvulcanized rubber composition (final kneading step). The unvulcanized rubber composition was press-vulcanized for 12 minutes at 170°C in a 0.5 mm-thick mold to give a vulcanized rubber composition.

The unvulcanized rubber compositions prepared as above were each formed into the shape of a cap tread and assembled with other tire components to build an unvulcanized tire, which was then press-vulcanized at 170°C for 10 minutes to prepare a test tire (tire size: 215/45R17) .

The vulcanized rubber compositions and test tires prepared as above were evaluated as described below. The results are shown in Table 1.

(Tensile properties)

No.3 dumbbell specimens prepared from the vulcanized rubber compositions were subjected to a tensile test at room temperature in accordance with JIS K 6251 "Rubber, vulcanized or thermoplastics - Determination of tensile stress-strain properties" to determine the elongation at break EB (%). The EB values are expressed as an index (tensile property index) using the following equation. A higher tensile property index indicates higher elongation at break and better tensile properties.

```
(Tensile property index) = (elongation at break of each
formulation example)/(elongation at break of Comparative
Example 1) × 100
```

(Fuel economy)

The loss tangent (tan $\delta$) of the vulcanized rubber compositions was measured at a temperature of 30°C, a frequency of 10 Hz, an initial strain of 10%, and a dynamic strain of 2% using a viscoelastic spectrometer VES (Iwamoto Seisakusho Co., Ltd.), and expressed as an index (fuel economy index) using the following equation. A higher fuel economy index indicates a lower rolling resistance and better fuel efficiency (fuel economy).

```
(Fuel economy index) = (tan δ of Comparative Example
1)/(tan δ of each formulation example) × 100
```

(Abrasion resistance)

Each set of the test tires were mounted on a vehicle, and the vehicle was driven 15,000 km in an urban area. Thereafter, the decrease in the groove depth was measured, and the mileage at which the groove depth was decreased by 1 mm was calculated. Then, the decrease in the groove depth of each formulation example was expressed as an index (abrasion resistance index) using the following equation, where the abrasion resistance index of Comparative Example 1 was set equal to 100. A higher abrasion resistance index indicates better abrasion resistance.

```
(Abrasion resistance index) = (mileage at which groove
depth was decreased by 1 mm in each example or comparative
example)/(mileage at which groove depth was decreased by 1
mm in Comparative Example 1) × 100
```

(Overall performance)

In Table 1, the average of the tensile property index, fuel economy index, and abrasion resistance index was evaluated as overall performance.

[Table 1]

EP 3 778 750 A1

| | | Example | | | | | | | | | | | | | | | Comparative Example | | | | | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 | 5 | 6 |
| Formulation (parts by mass) | SBR | 80 | 80 | 80 | 80 | 80 | 80 | 80 | 80 | 80 | 80 | 80 | 80 | 80 | 80 | 80 | 80 | 80 | 80 | 80 | 80 | 80 |
| | BR1 | 20 | 20 | 15 | 20 | 20 | 20 | 20 | 20 | 20 | 20 | 20 | 20 | 20 | — | 20 | 20 | 20 | 20 | 20 | 20 | 20 |
| | BR2 | — | — | 5 | — | — | — | — | — | — | — | — | — | — | 20 | — | — | — | — | — | — | — |
| | CB | 5 | 5 | 5 | 5 | 5 | 5 | 5 | 5 | 5 | 5 | 5 | 5 | 5 | 5 | 5 | 5 | 5 | 5 | 5 | 5 | 5 |
| | Silica | 90 | 90 | 90 | 90 | 90 | 90 | 90 | 90 | 90 | 90 | 90 | 90 | 90 | 90 | 90 | 90 | 90 | 90 | 90 | 90 | 90 |
| | Silane coupling agent | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 | 7.2 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Oil | 25.5 | 25.5 | 25.5 | 25.5 | 25.5 | 23.69 | 20.1 | 18.5 | 18.5 | 18.5 | 18.5 | 18.5 | 18.5 | 18.5 | 24.5 | 27.3 | 18.5 | 18.5 | 25.5 | 25.5 | 25.5 |
| | HARITACK 4740 | — | — | — | — | — | — | — | 7 | 7 | 7 | — | — | — | 7 | — | — | — | 8.8 | — | — | — |
| | TO125 | — | — | — | — | — | — | — | — | — | — | 7 | — | — | — | — | — | 8.8 | — | — | — | — |
| | C10 | — | — | — | — | — | — | — | — | — | — | — | 7 | — | — | — | — | — | — | — | — | — |
| | Sylvares 4401 | — | — | — | — | — | — | — | — | — | — | — | — | 7 | — | — | — | — | — | — | — | — |
| | Masterbatch 1 | 3.6 | — | — | 3.0 | — | — | — | — | — | — | 3.6 | 3.6 | 3.6 | 3.6 | 4.6 | — | — | — | — | — | — |
| | Masterbatch 2 | — | 3.6 | — | — | — | — | — | — | — | — | — | — | — | — | — | — | — | — | — | — | — |
| | Masterbatch 3 | — | — | 3.6 | — | — | — | — | — | — | — | — | — | — | — | — | — | — | — | — | — | — |
| | Masterbatch 4 | — | — | — | — | 2.70 | — | — | — | — | — | — | — | — | — | — | — | — | — | — | — | — |
| | Masterbatch 5 | — | — | — | — | — | 5.41 | — | — | — | — | — | — | — | — | — | — | — | — | — | — | — |
| | Masterbatch 6 | — | — | — | — | — | — | 9.0 | — | — | — | — | — | — | — | — | — | — | — | — | — | — |
| | Masterbatch 7 | — | — | — | — | — | — | — | 3.6 | — | — | — | — | — | — | — | — | — | — | — | — | — |
| | Masterbatch 8 | — | — | — | — | — | — | — | — | 3.6 | — | — | — | — | — | — | — | — | — | — | — | — |
| | Masterbatch 9 | — | — | — | — | — | — | — | — | — | 3.6 | — | — | — | — | — | — | — | — | — | — | — |
| | Masterbatch 10 | — | — | — | — | — | — | — | — | — | — | — | — | — | — | — | — | — | — | 3.6 | — | — |
| | Masterbatch 11 | — | — | — | — | — | — | — | — | — | — | — | — | — | — | — | — | — | — | — | 3.6 | — |
| | Masterbatch 12 | — | — | — | — | — | — | — | — | — | — | — | — | — | — | — | — | — | — | — | — | 3.6 |
| | Sulfur | — | — | — | — | — | — | — | — | — | — | — | — | — | — | — | 1.80 | 1.80 | 1.80 | — | — | — |
| | Vulcanization accelerator 1 | 1.1 | 1.1 | 1.1 | 1.7 | 1.1 | 1.1 | 1.1 | 1.1 | 1.1 | 1.1 | 1.1 | 1.1 | 1.1 | 1.1 | 0.7 | 1.1 | 1.1 | 1.1 | 1.1 | 1.1 | 1.1 |
| | Vulcanization accelerator 2 | 2 | 2 | 2 | 2.2 | 2 | 2 | 2 | 2 | 2 | 2 | 2 | 2 | 2 | 2 | 2 | 2 | 2 | 2 | 2 | 2 | 2 |
| Total PHR | | 242.4 | 242.4 | 242.4 | 242.6 | 241.5 | 242.4 | 242.4 | 242.4 | 242.4 | 242.4 | 242.4 | 242.4 | 242.4 | 242.4 | 242 | 242.4 | 242.4 | 242.4 | 242.4 | 242.4 | 242.4 |
| Hs: adjusted to 65 ± 1 | | | | | | | | | | | | | | | | | | | | | | |
| Evaluation | Tensile properties (Target value ≥ 103) | 112 | 108 | 108 | 106 | 108 | 107 | 105 | 103 | 103 | 103 | 112 | 111 | 110 | 112 | 115 | 100 | 103 | 114 | 99 | 100 | 93 |
| | Fuel economy (Target value ≥ 100) | 102 | 100 | 102 | 102 | 104 | 102 | 100 | 100 | 100 | 100 | 100 | 100 | 102 | 102 | 101 | 100 | 92 | 87 | 95 | 100 | 96 |
| | Abrasion resistance (Target value ≥ 100) | 102 | 102 | 100 | 102 | 102 | 100 | 100 | 100 | 100 | 100 | 106 | 106 | 101 | 106 | 100 | 100 | 101 | 100 | 94 | 100 | 89 |
| | Overall performance (average of three properties) (Target value ≥ 101) | 105 | 103 | 103 | 103 | 105 | 103 | 102 | 101 | 101 | 101 | 106 | 106 | 104 | 107 | 105 | 100 | 99 | 100 | 96 | 100 | 93 |

Table 1 demonstrated that the examples including a rubber component containing a diene rubber, silica and/or carbon black, and a masterbatch containing sulfur and a resin having an acid value of 5 or higher exhibited a balanced improvement in tensile properties, fuel economy, and abrasion resistance.

## Claims

1. A rubber composition, comprising:

   a rubber component containing a diene rubber;
   at least one of silica or carbon black; and
   a masterbatch containing sulfur and a resin having an acid value of 5 or higher.

2. The rubber composition according to claim 1,
   wherein the resin has an acid value of 10 to 180.

3. The rubber composition according to claim 1 or 2,
   wherein the resin has a softening point of 120°C or lower.

4. The rubber composition according to any one of claims 1 to 3,
   wherein the rubber composition has a total sulfur content of 1.5 parts by mass or more per 100 parts by mass of the rubber component.

5. The rubber composition according to any one of claims 1 to 4,
   wherein the rubber composition comprises a thiazole vulcanization accelerator in an amount of 1.5 parts by mass or less per 100 parts by mass of the rubber component.

6. A masterbatch, comprising:

   sulfur; and
   a resin having an acid value of 5 or higher.

7. The masterbatch according to claim 6,
   wherein the masterbatch is free from any diene rubber.

8. A method of using as an additive to rubber a masterbatch containing sulfur and a resin having an acid value of 5 or higher.

## INTERNATIONAL SEARCH REPORT

| | International application No. |
|---|---|
| | PCT/JP2019/009559 |

**A. CLASSIFICATION OF SUBJECT MATTER**
Int. Cl. C08L9/00(2006.01)i, C08J3/22(2006.01)i, C08K3/04(2006.01)i,
C08K3/06(2006.01)i, C08K3/36(2006.01)i, C08K5/47(2006.01)i,
C08L93/04(2006.01)i, C08L101/08(2006.01)i
According to International Patent Classification (IPC) or to both national classification and IPC

**B. FIELDS SEARCHED**

Minimum documentation searched (classification system followed by classification symbols)
Int. Cl. C08L9/00, C08J3/22, C08K3/04, C08K3/06, C08K3/36, C08K5/47,
C08L93/04, C08L101/08

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-528371 A (ARIZONA CHEMICAL COMPANY, LLC) 15 September 2016, entire text & US 2016/0251503 A1, entire text & WO 2015/077800 A1 & EP 2989152 A1 & KR 10-2016-0075383 A & CN 105899594 A & BR 112015029725 A | 1-8 |
| A | JP 07-224188 A (JAPAN SYNTHETIC RUBBER CO., LTD.) 22 August 1995, entire text (Family: none) | 1-8 |
| A | JP 2017-110071 A (SUMITOMO RUBBER INDUSTRIES, LTD.) 22 June 2017, entire text (Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03.06.2019 | 11.06.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/009559

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2017/065218 A1 (NIPPON ZEON CO., LTD.) 20 April 2017, entire text & US 2018/0282492 A1, entire text & EP 3363850 A1 & KR 10-2018-0068976 A & CN 108350186 A | 1-8 |
| A | JP 2011-219540 A (SUMITOMO RUBBER INDUSTRIES, LTD.) 04 November 2011, entire text (Family: none) | 1-8 |

Form PCT/ISA/210 (continuation of second sheet) (January 2015)

**REFERENCES CITED IN THE DESCRIPTION**

**Patent documents cited in the description**

• JP 5597959 B